# EUROPEAN PATENT APPLICATION

(11) **EP 2 368 761 A2**
(43) Date of publication of application: **28.09.2011**
(21) Application number: 11158148.4
(22) Date of filing: 14.03.2011
(51) Int. Cl.: B60Q 1/30

(54) **Lighting board system**

(30) Priority: 15.03.2010 GB 1004242
(71) Applicant: Mont Blanc Industri UK Limited, Leighton Buzzard Bedfordshire LU7 4TZ (GB)
(72) Inventor: Dickinson, Martin, Leighton Buzzard, Bedfordshire LU7 4TZ (GB)
(74) Representative: Patel, Binesh

(57) **Abstract**

The invention provides a system for replicating illumination of a vehicle lamp on a corresponding lighting board lamp. The system comprises a light sensor (36) and the corresponding lighting board lamp (28,30,32,34). The light sensor is arranged to sense illumination of the vehicle lamp (14,16,18,20) and to communicate with the corresponding lighting board lamp. The lighting board lamp is arranged to be illuminated in response to sensed illumination of the vehicle lamp.

## Description

The present invention relates to a system for replicating illumination of a vehicle lamp on a corresponding lighting board lamp. Lighting boards comprising lighting board lamps are used to replicate corresponding vehicle lamps when those corresponding vehicle lamps are obstructed from view, for example by a bike carrier or when a trailer is being towed. Existing lighting boards have an electrical connection to the vehicle electronics which feeds the vehicle lamps. Often this connection is via a towball on the rear of a vehicle. Lighting boards are provided with corresponding towball mounting attachments. Other systems rely upon direct electrical connection of the lighting board wiring to the vehicle lamp wiring. This is usually done after manufacture of the vehicle.

For the purposes of this specification "replicating illumination of a vehicle lamp" is intended to mean that the meaning conveyed by illumination of that vehicle lamp is replicated. For example, if a vehicle lamp being illuminated means that the brakes are activated, then replication of that illumination on a corresponding lighting board lamp would be achieved by the lighting board lamp being illuminated such that a person viewing the lighting board lamp would understand that the vehicle brakes were active. Replicating in this sense does not necessarily mean that the lighting board lamp is at the exact same light level, colour etc as the vehicle lamp which it is intended to replicate.

According to one aspect of the invention there is provided a system for replicating the illumination of a vehicle lamp on a corresponding lighting board lamp according to claim 1. Amongst other things, an advantage of this invention is that replication of illumination of a vehicle lamp is possible without a direct electronic feed. Tampering with vehicle electronics after manufacture can cause problems.

Preferable features of the invention are as defined in the dependent claims.

Embodiments of the invention will now be described, by way of example only, with reference to the accompanying drawings in which:
Figure 1 is a schematic view of an embodiment of the invention;
Figures 2 and 3 show different examples of sensors which can be used with the invention;
Figure 4 schematically shows part of a system according to another embodiment of the invention;
Figure 5 schematically shows a further embodiment of the invention including a calibration mechanism;
Figure 6 illustrates how some embodiments of the invention can be calibrated to vary the sensitivity of the system; and
Figures 7a and 7b schematically show embodiments of the invention in which more than one sensor is used to measure light level from a single vehicle lamp.

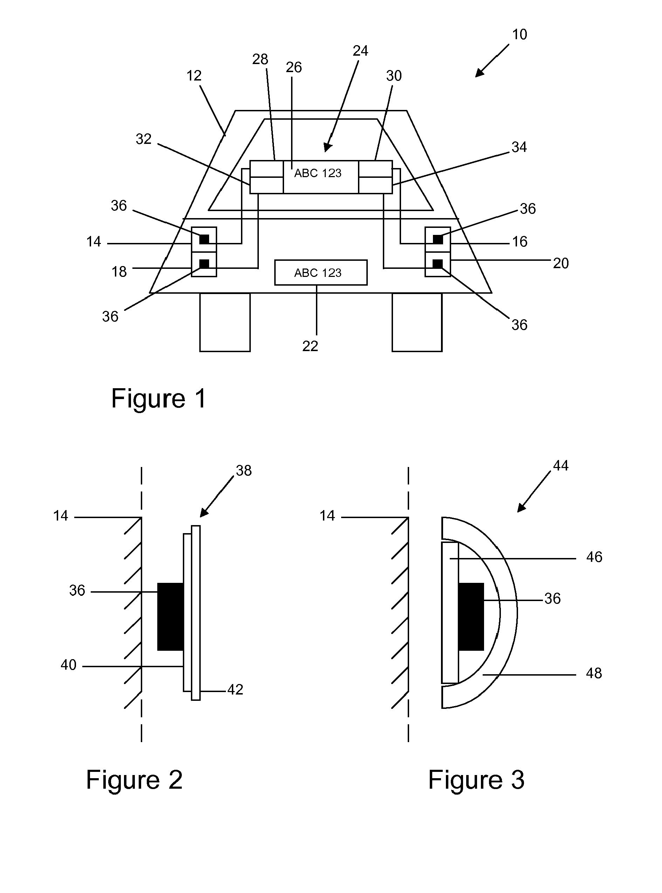

Referring to Figure 1, a system (10) for replicating illumination of a vehicle lamp on a corresponding lighting board lamp is shown in place on a vehicle (12). For clarity the vehicle lamps are not shown as being obstructed in Figure 1. In practice, the vehicle lamps might be obstructed, for example, by a bike carrier, or a trailer when the invention is in use. The vehicle (12) has a number of different vehicle lamps in this example. For clarity, only left and right brake lights (14, 16), and left and right indicators (18, 20) are shown. A typical vehicle would also have side lights, reverse lights, fog lights etc. The vehicle (12) also has a vehicle registration plate (22).

The system (10) further comprises a lighting board (24), which in this example includes a vehicle registration portion (26) and a plurality of lighting board lamps (28, 30, 32, 34). In this embodiment, the lighting board lamps, (28, 30, 32, 34) correspond to the vehicle lamps (14, 16, 18, 20) respectively. The system (10) is intended to replicate illumination of the vehicle lamps (14, 16, 18, 20) on the corresponding lighting board lamps (28, 30, 32, 34). The vehicle registration portion (26) is provided since the vehicle registration plate (22) might also be obscured in use. In other embodiments, there may be no vehicle registration portion (26) on the lighting board (24).

In this example the brake lights (14, 16) appear a red colour, and the indicator lights (18, 20) flash a yellow colour when illuminated. On the lighting board (24), the lighting board lamps (28, 30, 32, 34) are arranged to present the same colours when illuminated as their corresponding vehicle lamps (14, 16, 18, 20). The lighting board lamps (32, 34) corresponding to the indicators (18, 20) are arranged to flash in the same way as the indicators. In other embodiments, the lighting board lamps may comprise slightly different colours or different types of illumination (continuous, flashing, intermittent etc), but which still retain the same meaning as the vehicle lights which they are replicating. For example, in one particular embodiment, the brake lights might correspond to lighting board lamps which illuminate the word "BRAKE" in a colour other than red, or in red. It will be clear to the skilled person from this example that this invention covers any system in which the meaning of the vehicle lamp is replicated via a lighting board lamp.

The system (10) also comprises a plurality of light sensors (36). In this embodiment, the light sensors are in the form of phototransistors. In other embodiments the light sensors might be other light diodes, or any other suitable light sensor. The light sensors (36) are arranged to sense illumination (or non-illumination) of the vehicle lamp and to communicate with the corresponding lighting board lamp. In this example, Figure 1 shows that a light sensor (36) is attached to each of the vehicle lamps (14, 16, 18, 20), and is in communication with each corresponding lighting board lamp (28, 30, 32, 34). When a vehicle lamp is lit, for example when the brake lights (14, 16) are lit, the phototransistors (36) detect this illumination, and communicate a signal to the lighting board lamps (28, 20) causing them (28, 30) to illuminate. If one of the vehicle brake lights (14, 16) has failed, the other will still work and a signal will still illuminate the corresponding lighting board lamp pf the working vehicle lamp.

In other embodiments, there may be only one vehicle lamp and corresponding lighting board lamp. The skilled person will understand that more or less lamps can be provided as required.

Figures 2 and 3 show examples of light sensors (36) and different attachment means for attaching the light sensors in position to be able to detect illumination of a vehicle lamp. Figure 2 shows a first light sensor arrangement (38) including attachment means for attaching a light sensor (36) to the vehicle lamp (14). The attachment means comprises an adhesive layer (40), and a non-adhesive backing layer (42). As shown in Figure 2, the adhesive layer (40) is attached to the sensor (36), and the non-adhesive layer (42) is attached to the adhesive layer (40) on an opposite side to the sensor (36), such that the first light sensor arrangement (38) can be attached to the vehicle lamp (14) with the light sensor (36) in direct contact with the surface of the lamp (14). In some embodiments the adhesive layer (40) is a single use adhesive layer and cannot be peeled off the vehicle lamps and re-used. In other embodiments, the adhesive layer (40) may be a re-usable adhesive layer, which can be peeled off the vehicle lamp (14), and re-used later. In such embodiments, re-positioning of the first light sensor arrangement (38) is possible if it is positioned inaccurately at first.

In some embodiments the attachment means which is on the opposite side of the sensor (36) to the vehicle lamp (14) (e.g. in this embodiment, the adhesive layer (40) and non-adhesive layer (42)) is opaque. By providing this opaque attachment means, the first light sensor arrangement is less sensitive to ambient light variation. Light mainly reaches the light sensor (36) from the vehicle lamp (14) and not from, for example, natural daylight, or other ambient sources.

Referring to Figure 3, a second light sensor arrangement (44) includes a second attachment means (46), to which the light sensor (36) is attached. It is intended that the second attachment means (46) attaches directly in contact with the vehicle lamp (14), and is substantially transparent, or at least sufficiently transparent, such that light from the brake lamp (14) can be sensed at the light sensor (36). The attachment means (46) in this embodiment comprises a suction pad. In other embodiments it may comprise an adhesive layer, such as a removable and re-attachable adhesive layer.

Figure 3 also shows that in some embodiments there is provided a shield (48) which is arranged to at least partially obstruct ambient light from reaching the light sensor (36). The shield (48) in this embodiment is therefore opaque. In some embodiments, no such shield is provided. When there is less variation in ambient light reaching the light sensor (36) (e.g. in systems where there is effective shielding and/or in systems where the light sensor (36) is in contact with or very close to the vehicle lamp), then it can be easier to distinguish between when a vehicle lamp is on (illuminated) or off (not illuminated). Otherwise, a large amount of ambient light may falsely trigger the light sensor (36) into sensing that the vehicle lamp is illuminated. Use of an adhesive layer or suction panel or similar attachment means can help to maintain the light sensor in a close position relative to the vehicle lamp and to obtain the resulting benefits described above.

In some embodiments the light sensor (36) is able to distinguish between different illumination levels of the vehicle lamp - a phototransistor is particularly good for this purpose. In some vehicle systems, different illumination levels of the same vehicle lamp are intended to convey different meanings to a viewer (for example other road users viewing the light). For example, a single lamp may be used at a first illumination (e.g. intensity) level to indicate that a side light is on, and a second illumination level to indicate that a brake light is on. In some embodiments of this invention, the light sensor (36) is arranged to sense these different illumination levels, and convey an appropriate signal to the corresponding lighting board lamp so that the correct intended meaning is communicated. This meaning may be communicated in different ways in different embodiments.

For example, in some embodiments the corresponding lighting board lamp will be arranged to be lit at different illumination levels itself - these different illumination levels correspond to the different illumination levels of the vehicle lamp, and so convey those intended meanings.

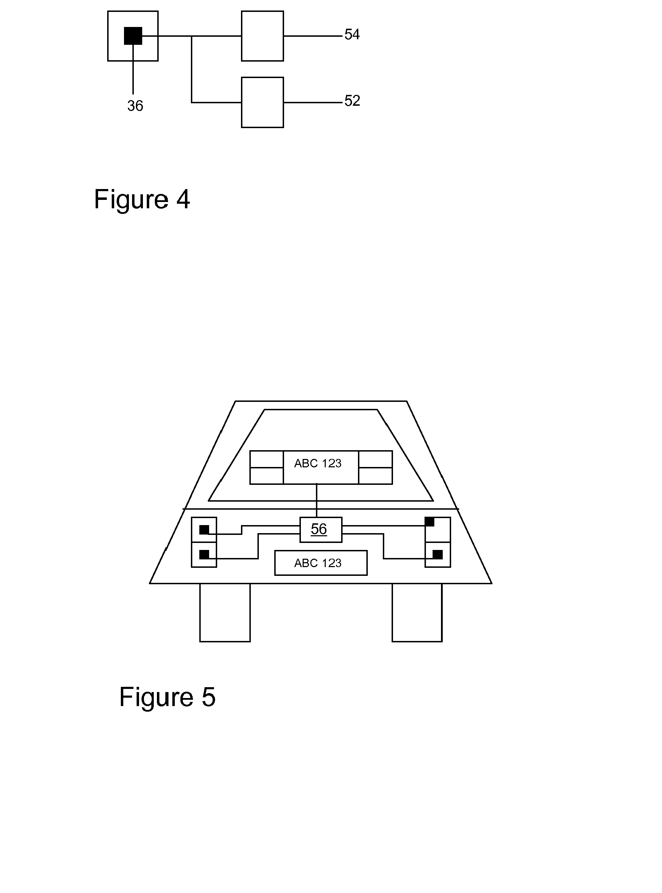

In another embodiment, the light sensor (36) is arranged to communicate with more than one lighting board lamp - in the example given above, two lighting board lamps are necessary (see Figure 4). A vehicle lamp (50) is able to light at different illumination levels to indicate either that the side light is on or the brake light is on. A corresponding lighting board has two lighting board lamps, a side light lighting board lamp (52) and a brake light lighting board lamp (54). A single light sensor (36) is able to sense the different illumination levels, and is in communication with both the side light and brake light lighting board lamps (52, 54). If the first illumination level is detected, then a signal is sent to illuminate the side light lighting board lamp (52), and if the second illumination level is detected then a signal is sent to illuminate the brake light lighting board lamp (54). In such embodiments, a relatively technologically simple set of lighting board lamps (which operate in a binary way, e.g. ON or OFF) can be used to correspond to a relatively complex vehicle lamp (which operates at a plurality of illumination levels (e.g. low intensity, high intensity and OFF). This can be a useful feature.

Referring to Figure 5, in some embodiments, the system (10) comprises a calibration mechanism (56). The calibration mechanism (56) is arranged to communicate with the light sensors (36) and the lighting board lamps (14, 16, 18, 20). The calibration mechanism (56) allows setting of the illumination level at which the light sensor (36) detects that a vehicle lamp is illuminated, or is at a particular illumination level, e.g. in examples where a vehicle lamp can be illuminated at a variety of light levels. This type of calibration can be useful since, if the lighting board system is assembled after manufacture of a vehicle, then the positions in which the light sensors are attached relative to vehicle lamps can vary significantly (dependent upon a user attaching them), causing significant variations in the amount of light from the relevant vehicle lamp which reaches the light sensor relative to the total amount of light (including ambient light) reaching the sensor. Changes in ambient light can be caused by changing position of the sensor relative to the vehicle lamp, time of day (whether it is day or night), weather (e.g. whether it is a cloudy or sunny day), amount of shielding available (e.g. whether a shield is provided or not, whether the shield is partly opaque, or completely opaque etc). The calibration mechanism might, in some embodiments, have different memory settings, for example day and night settings to account for the fact that there is likely to be less ambient light at night.

The calibration mechanism (56) comprises a user settable calibration mechanism in this embodiment. In other embodiments the calibration may occur at the time of manufacture.

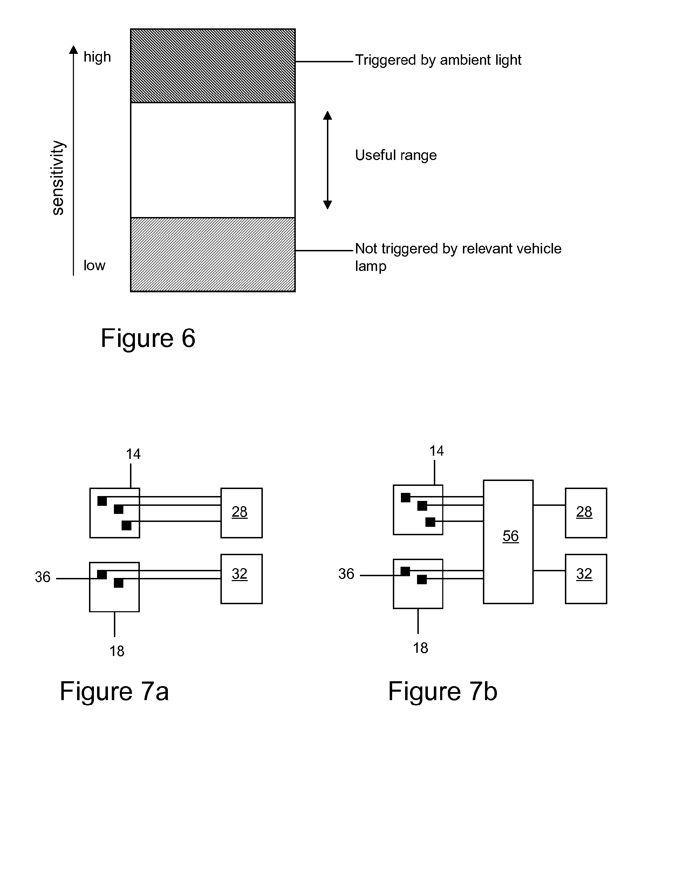

Referring to Figure 6, a simplistic chart is shown to illustrate the usefulness of a user settable calibration mechanism. The vertical axis of the chart in Figure 6 indicates sensitivity of the system. In a system where the sensitivity is set too low, the light sensor will not be triggered by illumination of a relevant vehicle lamp. In a system where the sensitivity is set too high, the light sensor will be triggered by ambient light. There will be a range of sensitivities between "high" and "low" within which the light sensor can sensibly and safely operate. Allowing a user to calibrate the level of illumination required to trigger a positive signal from the light sensor is useful since it is then possible to calibrate for factors which occur after manufacture, for example to account for the precise positioning of a light sensor relative to a vehicle lamp. In some embodiments, it is possible to provide a separate calibration for each sensor on each vehicle lamp. This is useful since, in the example shown in Figure 5, the sensor provided on the left brake lamp might be positioned centrally on the lamp, whereas the light sensor provided on the right brake light might be positioned towards a corner of the vehicle lamp. The calibration mechanism (56) may comprise a dial and button arrangement (or any other suitable user input arrangement) which allows a user to define the minimum and maximum light levels sensed by the sensor, which the system should take as an indication of whether or not a vehicle lamp is on, or whether or not a vehicle lamp is on at a particular illumination level. The chart of Figure 6 represents a binary (ON or OFF) vehicle lamp system. For a vehicle lamp having multiple illumination levels, the useful range is split into multiple sections defining each illumination level.

Some degree of tuning or calibration is useful since different vehicles have different types of lighting clusters and so the difficulty of providing a "one size fits all" arrangement is overcome.

Referring to Figures 7a and 7b, a plurality of light sensors (36) is provided in some embodiments to sense illumination of any one or more of the vehicle lamps. In Figure 7a, three light sensors (36) are shown on brake lamp (14), and two light sensors (36) are shown on side light lamp (18). Similarly, in Figure 7b three light sensors (36) are shown on vehicle lamp (14) and two light sensors (36) are shown on vehicle lamp (18). In the Figure 7b arrangement, the light sensors (36) send signals to a calibration mechanism (56) which is arranged to allow user calibration for each individual vehicle lamp. Therefore, the three light sensors (36) associated with the vehicle lamp (14) have their signals taken in combination, and not individually, during the calibration process to determine whether or not the corresponding lighting board lamp (28) should be lit. Separate calibration for each vehicle lamp (14, 18) is provided. Advantageously, in such arrangements, the combination of factors (position, ambient light, individual sensor characteristics (e.g. sensitivity)) for each individual sensor does not need to be considered to achieve an accurate indication of the illumination state of the vehicle lamp.

Various modifications to this invention will be apparent to the skilled person. Different types of light sensors may be used. The lighting board lamps may not be provided on a board - they may be provided in isolation, or on another suitable carrier. The principle of the invention as defined in claim 1 will remain unaltered. A different calibration mechanism might be provided. Different settings may be provided via the calibration mechanism - as previously indicated day or night settings, or seasonal settings, or any other suitable settings. These settings might be provided by a car manufacturer prior to sale. Alternatively they might be set by a user after manufacture. Although not shown in the drawings, it will be clear that means is provided for attaching the lighting board to the vehicle.

## Claims

1. A system for replicating illumination of a vehicle lamp on a corresponding lighting board lamp, the system comprising a light sensor and the corresponding lighting board lamp, wherein the light sensor is arranged to sense illumination of the vehicle lamp and to communicate with the corresponding lighting board lamp, and
the lighting board lamp is arranged to be illuminated in response to sensed illumination of the vehicle lamp.

2. The system of claim 1 comprising attachment means arranged to attach the light sensor to the vehicle lamp, such as an adhesive member.

3. The system of claim 2 wherein the attachment means comprises removable attachment means, such as a suction member, or reusable adhesive member.

4. The system of claim 2 or claim 3 wherein the attachment means is arranged to attach the light sensor abuttingly adjacent to, or near to, the vehicle lamp.

5. The system of any preceding claim comprising a shield arranged to at least partly obstruct ambient light from reaching the light sensor.

6. The system of claim 5 when dependent on any of claims 2 to 4, wherein the attachment means comprises an at least partially opaque portion which obstructs ambient light from reaching the light sensor.

7. The system of any preceding claim wherein the light sensor is arranged to distinguish between different illumination levels of the vehicle lamp, wherein the different illumination levels are intended to have different meanings, e.g. first illumination level indicates brake light, and second illumination level indicates side light.

8. The system of claim 7 wherein the corresponding lighting board lamp is arranged to be lit at different illumination levels intended to correspond to the different meanings.

9. The system of claim 8 wherein the light sensor is arranged to communicate with more than one lighting board lamp and the illumination of the vehicle lamp is replicated using the more than one lighting board lamps, wherein different lighting board lamps are arranged to be illuminated to correspond to the different meanings.

10. The system of any preceding claim comprising a calibration mechanism arranged to set an illumination level at which the light sensor detects that the vehicle lamp is illuminated, or is at a particular illumination level, and optionally wherein the calibration mechanism takes into account any one or more of:
ambient light level;
position of light sensor relative to vehicle lamp;
presence or lack of shield.

11. The system of claim 10 wherein the calibration mechanism comprises a user-settable calibration mechanism.

12. The system of any claims 10 or claim 11 wherein the calibration mechanism is arranged to set an illumination range through which the light sensor detects that the vehicle lamp is illuminated, or is at a particular illumination level.

13. The system of any preceding claim for replicating illumination of a plurality of vehicle lamps with corresponding lighting board lamps.

14. The system of any preceding claim comprising a plurality of light sensors arranged to sense illumination of the, any one or more of, or each, vehicle lamp.

15. The system of any of claims 10 to 14 wherein the calibration mechanism is arranged to provide separate calibration for the light sensor, or plurality of light sensors, associated with separate vehicle lamps.
